# EUROPEAN PATENT APPLICATION

(11) **EP 1 316 581 A1**
(43) Date of publication of application: **04.06.2003**
(21) Application number: 01128261.3
(22) Date of filing: 28.11.2001
(51) Int. Cl.: C08K 3/00, C08K 13/02, C08L 101/00, C08L 83/04, H01B 7/29

(54) **Flame retardant polymer composition**

(71) Applicant: Borealis Technology Oy, 06101 Porvoo (FI)
(72) Inventor: Sultan, Bernt-Ake, 44442 Stenungsund (SE); Hermansson, Anna, 44460 Stora Höga (SE); Hjertberg, Thomas, 411 31 Göteborg (SV)
(74) Representative: Kador & Partner

(57) **Abstract**

The present invention relates to a flame retardant polymer composition which is substantially free of halogen compounds and organo-metallic salts, comprising
(A) an organic polymer matrix,
(B) a silicone-group containing compound,
(C) an inorganic filler material which is neither a hydroxide nor a substantially hydrated compound and
(D) a metal oxide.

Furthermore, the invention relates to a wire or a cable comprising said flame retardant composition and to the use of said flame retardant polymer composition for the production of a flame retardant layer, in particular of a wire or cable.

## Description

The present invention relates to a flame retardant polymer composition and to a wire or cable comprising such a flame retardant polymer composition.

For improving the flame retardancy of polymers, several approaches are known in the art. First, it is known to include compounds containing halides into the polymer. However, these materials have the disadvantage that by burning hazardous and corrosives gases like hydrogen halides are deliberated. This is also a disadvantage of flame retardant polymer composition based on PVC.

In a further approach, flame retardant compositions include relatively large amounts, typically 50 to 60 wt.% of inorganic fillers as e.g. hydrated and hydroxy compounds, which during burning decompose endothermically and deliberate inert gases at temperatures in the range of 200 to 600°C. Such organic fillers e.g. include Al(OH)₃ and Mg(OH)₂. However, these flame retardant materials suffer from the high costs of the inorganic fillers and the deterioration of the processability and mechanical properties due to the high amount of filler.

A third approach as disclosed in EP 0 393 959 uses a silicon fluid or gum in a composition together with an organic polymer comprising an acrylate or acetate and an inorganic filler. However, the flame retardancy of these compositions can still be improved.

It is an object of the present invention to avoid the disadvantages of the prior art materials and to provide a flame retardant polymer composition with improved flame retardancy and good processability and mechanical properties.

The present invention is based on the finding that the flame retardancy of a polymer composition comprising an organic polymer matrix, a silicone group containing compound and an inorganic filler material can further be improved by the addition of a metal oxide.

The present invention therefore provides a flame retardant polymer composition which is substantially free of halogen compounds and organo-metallic salts, comprising
(A) an organic polymer matrix,
(B) a silicone group containing compound
(C) an inorganic filler material which is neither a hydroxide nor a substantially hydrated compound, and
(D) a metal oxide.
   In the inventive compositions, component (C) and (D) are of different chemical nature.
   The inventive compositions show an improved flame retardancy compared to the prior art materials and on decomposition do not deliberate any hazardous or corrosive gases.
   As a measurement for the flame retardancy, the limiting oxygen index (LOI) is used. The LOI according to ISO 4589-A-IV is a measurement of a product's flame resistance. To determine the LOI value a test specimen of the compound to be evaluated is ignited in an atmosphere of a mixture of nitrogen and oxygen. A content of oxygen in the N₂-O₂ mixture is gradually decreased until the specimen stops burning. The percentage of O₂ in that N₂-O₂ mixture constitutes the compounds LOI value.
   A high LOI value means that a high percentage of oxygen is needed to sustain combustion, i.e. the compound has a good flame resistance. The LOI value for a flame retardant composition should be at least 22 and higher values are desirable.
   The flame retardant polymer composition according to the present invention is particularly suitable for use in electric wire and cable.
   In a preferred embodiment, component (D) of the inventive flame retardant polymer composition is selected from the oxides of the metals of groups 2 to 15, more preferably of groups 2 to 13 of the periodic system of the elements (PSE).
   The group numbering used herein is in accordance with a new IUPAC system in which the groups of the PSE are numbered from 1 to 18.
   It is also within the scope of the present invention that component (D) is a mixture of any of the specified metal oxides.
   In a further preferred embodiment component (D) of the flame retardant composition is selected from the group of Al₂O₃, Fe₂O₃ and/or TiO₂, more preferably is TiO₂.
   Preferably, component (D) is present in the inventive flame retardant polymer composition in an amount of 10% or less, more preferred of 5% or less and still more preferred of 3% or less with respect to the total weight of the polymer composition.
   Component (C), i.e. the inorganic filler material suitable for use in the inventive flame retardant polymer composition, comprises all filler materials as known in the art which are neither hydroxides or substantially hydrated compounds.
   However, although the inorganic filler is not a hydroxide it can contain small amounts of a hydroxide typically less than 5 wt.% of the filler, preferable less than 3 wt.%. In addition, although the inorganic filler is not a substantially hydrated compound, it can contain small amounts of water, usually less than 3 wt.% of the filler, preferably less than 1.0 wt.%.
   As inorganic filler material also a mixture of the filler materials known in the art may be used.
   Preferably, component (C) of the inventive flame retardant polymer composition is a metal carbonate or a mixture of metal carbonates.
   Further preferred, component (C) is a carbonate of a metal of group 2 of the PSE, aluminium and/or zinc or mixtures of any of such compounds. By mixtures, also polynery compounds such as e.g. huntite (Mg₃Ca(CO₃)₄) are meant.
   In a particularly preferred embodiment component (C) of the inventive flame retardant polymer composition comprises at least 50 wt.% of calcium carbonate and further preferred it is substantially all calcium carbonate.
   Preferably, component (C) and (D) together are present in the inventive flame retardant polymer composition in an amount of 5 % to 70 %, more preferred of 10 % to 45 % and still more preferred of 25 % to 40 % of the total weight of the polymer composition.
   In a particularly preferred embodiment components (C) and (D) are present in an amount of about 30 % of the total weight of the polymer composition.
   Further preferred, component (B) of the inventive flame retardant polymer composition is a silicon fluid or a gum, or a copolymer of ethylene and at least one other comonomer including a vinyl unsaturated polybishydrocarbylsiloxane or a mixture of these compounds.
   Silicon fluids and gums suitable for use in the present inventions are known and include for example organopolysiloxane polymers comprising chemically combined siloxy units selected from the group consisting of R₃SiO_{0.5}, R₂SiO, R¹SiO_{1.5}, R¹R₂SiO_{0.5}, RR¹SiO,.R¹₂SiO,.RSiO_{1.5} and SiO₂ units and mixtures thereof in which each R represents independently a saturated or unsaturated monovalent hydrocarbon radical and each R¹ represents a radical such as R or a radical selected from the group consisting of hydrogen, hydroxyl, alkoxy, aryl, vinyl or allyl radicals.
   The organopolysiloxane preferably has a viscosity of approximately 600 to 300 x 10⁵ centipoise at 25° C.
   The silicone fluid or gum can contain fumed silica fillers of the type commonly used to stiffen silicone rubbers, e.g. up to 50% by weight.
   As mentioned above, component (B) may also be a copolymer of ethylene and at least one other comonomer including a vinyl unsaturated polybis-hydrocarbylsiloxane according to formula (I): 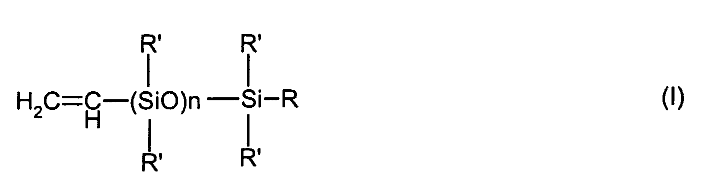 wherein n = 1 to 1000 and
   R and R' independently are vinyl, alkyl branched or unbranched, with 1 to 10 carbon atoms; aryl with 6 or 10 carbon atoms; alkyl aryl with 7 to 10 carbon atoms; or aryl alkyl with 7 to 10 carbon atoms.
   Such compounds e.g. are disclosed in WO 98/12253 the contents of which is herein enclosed by reference.
   It is preferred that component (B) is present in an amount of 0.1 to 30%, more preferred 1 to 10% and still more preferred 1 to 5% by weight of the total composition.
   Preferably, component (B) is polydimethylsiloxane and/or a copolymer of ethylene and vinyl polydimethylsiloxane. These components (B) are preferred due to commercial availability.
   The term "copolymer" as used herein is meant to include copolymers produced by copolymerization or by grafting of monomers onto a polymer backbone.
   Suitable polymers for forming component (A) include polyolefins, polyesters, polyethers and polyurethanes. Elastomeric polymers may also be used such as, for example, ethylene/propylene rubber (EPR), ethylene/propylene-diene monomer rubbers (EPDN), thermoplastic elastomer rubber (TPE) and acrylonitrile butadiene rubber (NBR). Silane-crosslinkable polymers may also be used, i.e. polymers prepared using unsaturated silane monomers having hydrolisable groups capable of crosslinking by hydrolysis and condensation to form silanol groups in the presence of water and, optionally, a silanol condensation catalyst.
   In a preferred embodiment component (A) is essentially formed by olefin homo- or copolymers. These are, for example, homopolymers or copolymers of ethylene, propylene and butene and polymers of butadiene or isoprene. Suitable homopolymers and copolymers of ethylene include low density polyethylene, linear, low, medium or high density polyethylene and very low density polyethylene.
   In a further preferred embodiment component (A) comprises a polar polymer.
   Further preferred, this polar polymer is an olefin/acrylate and/or olefin/acetate copolymer.
   It is further preferred that the polar polymer comprises a copolymer of ethylene with one or more comonomers selected from C₁- to C₆-alkyl acrylates, C₁- to C₆-alkyl metacrylates, acrylic acids, metacrylic acids and vinyl acetate. The copolymer may also contain ionomeric structures (like in e.g. DuPont's Surlyn types).
   Particularly preferred, the polar polymer comprises a copolymer of ethylene with C₂- C₄-alkyl acrylates.
   In addition to ethylene and the defined comonomers, the copolymers can also contain additional monomers.
   It is preferred that the polar polymer makes up 30% or more, more preferred 50% or more and still more preferred 60% or more of the total weight of component (A).
   Although the compositions according to the present invention are substantially free of organo-metallic salts, the inorganic filler may comprise a filler which has been surface-treated with a carboxylic acid or salt to aid processing and provide better dispersion of the filler in the organic polymer. Such coatings conventionally comprise not more than 2 wt.% of the filler. Preferably, the compositions according to the present invention contain less than 0.5 wt.% and are of organo-metallic salt.
   In addition to components (A) to (D) the inventive compositions may also contain additional conventional polymer ingredients such as, for example, antioxidants or UV stabilizers in small amounts.
   In a preferred embodiment in the inventive flame retardant composition the amount of component (B) is from 0.5 to 100 parts by weight, preferably 2 to 45 parts by weight, per 100 parts by weight of component (A) and the amount of component (C) and component (D) together is from 10 to 250 parts by weight, preferably 25 to 100 parts by weight per 100 parts by weight of the organic polymer.
   The flame retardant polymer composition according to the invention may be prepared by mixing together the components (A) to (D) using any suitable means such as conventional compounding or blending apparatus, e.g. a Bunbury Mixer, a 2-roll rubber mill or a twin screw extruder, Buss co-kneader, etc..
   Generally, the composition will be prepared by blending the components together at a temperature which is sufficiently high to soften and plasticise the organic polymer, typically at a temperature in the range of 120 to 200 °C.
   The flame retardant compositions according to the present invention can be used in many and diverse applications and products. The compositions can for example be moulded, extruded or otherwise formed into mouldings, sheets and fibers.
   As already mentioned, a particularly preferred use of the flame retardant compositions is for the manufacture of wire and cables. The compositions can be extruded about a wire or a cable to form an insulating or jacketing layer or can be used as bedding compounds.
   In the following the present invention is further illustrated by means of examples.

### Examples

1. Mixing procedure for obtaining Ethylene-butylacrylate copolymer (EBA) / silicone elastomer / CaCO₃ / metal oxide formulations:
Equipment: Brabender kneader (287 cm³)
Temp. 140°C

"Screw" speed: 60 rpm. When material was added the speed was lowered to 5 rpm to prevent material loss and dust. When mixed for approximately one minute the speed was increased up to 60 rpm again.

Feeding order/feeding time:
- 0 min:: half the amount of EBA together with an antioxidant (Anox 20)
- 2 min:: feeding the rest of the EBA
- 6 min:: CaCO₃ is added
- 10 min:: metal oxide is added
- 18 min:: the silicone elastomer is added
- 22 min:: the compound is ready

**2.** Compounds

The following compounds were produced as described above:

**Table 1:**

| | Formulation | EBA | Ca-CO₃% | Al₂O₃ % | Fe₂O₃ % | TiO₂ % | Si-elastomer % | Antioxidant % |
|---|---|---|---|---|---|---|---|---|
| 1. | CaSiEBA (comparative) | 64.8 | 30 | | | | 5 | 0.2 |
| 2. | CaSiEBA + Al₂O₃ | 64.8 | 28 | 2 | | | 5 | 0.2 |
| 3. | CaSiEBA + Fe₂O₃ | 64.8 | 28 | | 2 | | 5 | 0.2 |
| 4. | CaSiEBA + TiO₂ | 64.8 | 28 | | | 2 | 5 | 0.2 |
| EBA: EBA = an ethylene butylacrylate copolymer having a nominal melt index of (190°C, 2.16 kg) 0.4 g/10 min and a butyl acrylate content of 7.5%. | | | | | | | | |
| CaCO₃: Stearate (1%) coated calcium carbonate having an average particle size of 1.5 microns. | | | | | | | | |
| Si-elastomer: polydimethylsiloxane polymer having a plasticity of 150 (1/10 mm) and sold under the trade designation Silastic Q4-2735 by Dow Corning. | | | | | | | | |
| Al₂O₃ (110 µm), Fe₂O₃ (7 µm) and TiO₂ (3 µm) were all supplied by Sigma-Aldrich. | | | | | | | | |

**3.** Determination of LOI (limited oxygen index)

LOI was determined using a Stanton Redcroft FTA Flammability Unit by the US standard ASTM D 2863-77 and the ISO 4589. The OI results are based on approximately 10 test specimens of dimension "150 x 6 mm". These are stamped out from a 3 mm thick plate pressed in a Collins press. (low pressure (20 bar) at 150° C during one minute followed by high pressure (200 bar) during five minutes at the same temperature). Cooling rate was 10° C/minute under high pressure. The compound was immediately taken from the Brabender kneader to the press.

LOI is a measure of the minimum oxygen concentration of an O₂/N₂ mixture required to sustain combustion for a minimum of 3 minutes or not propagate more than 5 cm from the top of the test specimen. LOI is a measure of ease of extinction.

4. Results

The results of the LOI determinations of the formulations given in Table 1 according to item 3 are shown in Table 2.

**Table 2:**

| Formulation | LOI |
|---|---|
| 1. CaSiEBA (comparative) | 35 |
| 2. CaSiEBA+Al₂O₃ | 36 |
| 3. CaSiEBA+Fe₂O₃ | 39 |
| 4. CaSiEBA+TiO₂ | 39.5 |

The results show that the LOI of the inventive compositions is increased, thus indicating an improved flame retardancy of the compositions.

## Claims

1. A flame retardant polymer composition which is substantially free of halogen compounds and organo-metallic salts, comprising
(A) an organic polymer matrix,
(B) a silicone-group containing compound,
(C) an inorganic filler material which is neither a hydroxide nor a substantially hydrated compound and
(D) a metal oxide.

2. A flame retardant composition according to claim 1 wherein component (D) is selected from the oxides of the metals of groups 2 to 15, more preferably of groups 2 to 13, of the periodic system of the elements.

3. A flame retardant composition according to claim 2, wherein component (D) is Al₂O₃, Fe₂O₃ and/or TiO_{2,} more preferably TiO₂.

4. A flame retardant composition according to any of the preceding claims wherein component (D) is present in an amount of 10 % or less, more preferred of 5 % or less and still more preferred of 3 % or less of the total weight of the polymer composition.

5. A flame retardant composition according to any of the preceding claims wherein component (C) is a metal carbonate.

6. A flame retardant composition according to claim 5 wherein component (C) is a carbonate of a metal of group 2 of the periodic system of the elements, aluminium and/or zinc.

7. A flame retardant composition according to claim 6 wherein component (C) is calcium carbonate.

8. A flame retardant composition according to any of the preceding claims wherein components (C) and (D) together are present in an amount of 5 to 70 %, more preferred of 10 to 45 % and still more preferred of 25 to 40 % of the total weight of the polymer composition.

9. A flame retardant composition according to any of the preceding claims wherein component (B) is a silicone fluid or gum, and or a copolymer of ethylene and at least one other co-monomer including a vinyl unsaturated poly-bis-hydrocarbyl-siloxane.

10. A flame retardant composition according to any of the preceding claims wherein component (B) comprises is polydimethylsiloxane and or a copolymer of ethylene and vinyl-polymethylsiloxane.

11. A flame retardant composition according to any of the preceding claims wherein component (B) is present in an amount of 0.1 to 30 wt%, more preferred of 1 to 10 wt% and still more preferred of 1 to 5 wt% of the composition.

12. A flame retardant composition according to any of the preceding claims wherein component (A) is essentially formed by olefin homo-or copolymers.

13. A flame retardant composition according to any of the preceding claims wherein component (A) comprises a polar polymer.

14. A flame retardant composition according to claim 13 wherein the polar polymer comprises an olefin/acrylate and/or acetate copolymer.

15. A flame retardant composition according to claim 14 wherein the polar polymer comprises a copolymer of ethylene with one or more comonomers selected from C₁- to C₆- alkylacrylates, C₁- to C₆- alkylmethacrylates, acrylic acid, metacrylic acid and vinylacetate including ionomers thereof.

16. A flame retardant composition according to claim 15, wherein the polar polymer comprises a copolymer of ethylene with C₂- C₄ acrylates.

17. A flame retardant composition according to any of claims 13 to 16 wherein the polar polymer is present in an amount of 30 % or more, more preferred of 50 % or more and still more preferred of 60 % or more of the total weight of component (A).

18. A flame retardant composition according to any of the preceding claims in which the amount of component (B) is from 0.5 to 100 parts by weight, preferably 2 to 45 pbw, per 100 parts by weight of component (A) and the amount of component (C) and component (D) together is from 10 to 250 parts by weight, preferably 25 to 100 pbw per 100 parts by weight of the organic polymer.

19. A wire or a cable comprising a flame retardant composition according to any of the preceding claims.

20. Use of a flame retardant polymer composition according to any of claims 1 to 21 for the production of a flame retardant layer, in particular of a wire or cable.
